# EUROPEAN PATENT SPECIFICATION

(11) **EP 3 291 037 B1**
(45) Date of publication and mention of the grant of the patent: **08.07.2020**
(21) Application number: 17185881.4
(22) Date of filing: 11.08.2017
(51) Int. Cl.: G05B 19/414, G05B 19/4155, B25J 9/16

(54) **CONTROL DEVICE AND CONTROL SYSTEM**
STEUERUNGSVORRICHTUNG UND STEUERUNGSSYSTEM
DISPOSITIF ET SYSTÈME DE COMMANDE

(30) Priority: 02.09.2016 JP 2016172042
(43) Date of publication of application: 07.03.2018
(73) Proprietor: Omron Corporation, Kyoto-shi, Kyoto 600-8530 (JP)
(72) Inventor: JAKUNEN, Tetsushi, Kyoto-shi, Kyoto 600-8530 (JP); OTA, Masanori, Kyoto-shi, Kyoto 600-8530 (JP)
(74) Representative: Horn Kleimann Waitzhofer Patentanwälte PartG mbB

(56) References cited:
- EP-A2- 2 450 157
- US-A1- 2004 122 557
- US-A1- 2006 145 647
- US-A1- 2013 285 589

## Description

### CROSS-REFERENCE TO RELATED APPLICATION

This application is based on Japanese Patent Application No. 2016-172042 filed with the Japan Patent Office on September 2, 2016.

### FIELD

The present technique relates to control devices and control systems.

### BACKGROUND

In FA (Factory Automation) fields, a greater number of motors have been utilized for moving equipment and machinery. Typically, respective motors are controlled in rotational speed and the like, in conjunction with detection signals from various types of sensors, using control devices such as PLCs (Programmable Controllers).

For example, JP-A No. 2011-035664 (Patent Document 1) discloses a structure including a single controller connected to servo drivers, inverters or the like, through a network, in order to perform control thereon.

For example, in order to control various types of industrial robots, there is a need for providing accurate commands to motors adapted to drive respective components. Typically, in such a way as to move arms and the like which are driven by motors, along preliminarily-specified trajectories, it is necessary to update commands thereto in each predetermined control cycle (several hundred microseconds to several tens of milliseconds). As the control cycles for these commands are made shorter, the control accuracy can be made higher. Therefore, there has been a demand for shortening the control cycles as much as possible.

US 2013/0285589 A1 teaches that an upper-level control device includes a communication control unit that transmits a command, which is used after a command that is currently executed and includes an execution order, to an electric motor control device during electric motor control devices respectively perform driving controls of electric motors, and each of the electric motor control devices includes a command storage unit configured to store a plurality of commands, a communication control unit that stores the command received from the upper-level control device in the command storage unit in the execution order, and a command-follow-up control unit that performs a follow-up control of the electric motors based on the command. When the command storage unit is fully filled with the commands, the communication control unit stores a newly received command in the command storage unit by overwriting the newly received command in an area where an executed command is stored.

US 2004/0122557 A1 teaches a system and method for performing trajectory generation, interpolation, and control for a motion control application, where the trajectory generation, interpolation, and control are performed in parallel with each other.

### SUMMARY

A control device according to an embodiment of the present invention includes an interface for outputting a command value to a motor driver adapted to drive a motor; a storage portion adapted to store one or more commands for specifying a behavior of the motor driven by the motor driver; and a processing portion including a first arithmetic circuit and a second arithmetic circuit. The first arithmetic circuit is adapted to execute a first process for successively interpreting the one or more commands stored in the storage portion and for successively calculating a parameter set which defines a function relating to calculation of the command value. The second arithmetic circuit is adapted to execute a second process for calculating the command value based on the successively-calculated parameter set, in each predetermined control cycle, independently of the first process.

Preferably, the control device further includes a common memory which can be accessed from the first arithmetic circuit and the second arithmetic circuit. The first arithmetic circuit is adapted to write the successively-calculated parameter set into the common memory. The second arithmetic circuit is adapted to successively read out the parameter set from the common memory.

Preferably, the first arithmetic circuit is adapted to, after calculating the parameter set, write state information indicative of validity, in the common memory, in association with this calculated parameter set. The second arithmetic circuit is adapted to change the state information associated with the parameter set to a value indicative of invalidity, after completing the calculation of the command value based on this parameter set.

Preferably, the first arithmetic circuit is adapted to remove the parameter set associated with the state information indicative of the invalidity and, then, to write a newly-calculated parameter set into the common memory.

Preferably, the parameter set includes a parameter indicative of a number of times the command value should be calculated. After executing the calculation of the command value based on the parameter set calculated through the first process the specified number of times, the second arithmetic circuit is adapted to start the calculation of the command value based on a parameter set which has been calculated next through the first process.

A control system according to another embodiment of the present invention includes a motor driver adapted to drive a motor; and a control device adapted to output a command value to the motor driver. The control device includes a storage portion adapted to store one or more commands for specifying a behavior of the motor driven by the motor driver, and a processing portion including a first arithmetic circuit and a second arithmetic circuit. The first arithmetic circuit is adapted to execute a first process for successively interpreting the one or more commands stored in the storage portion and for successively calculating a parameter set which defines a function relating to calculation of the command value. The second arithmetic circuit is adapted to execute a second process for calculating the command value based on the successively-calculated parameter set, in each predetermined control cycle, independently of the first process.

According to the embodiments of the present invention, it is possible to shorten the control cycles for the command to the motor.

### BRIEF DESCRIPTION OF THE DRAWINGS

Fig. 1 is a schematic view illustrating an example of the structure of a control system according to an embodiment;
Fig. 2 is a schematic view illustrating an example of the structure of the control device according to the embodiment;
Figs. 3(A) and (B) are views illustrating an example of a motion program which is executed by the control device according to the embodiment;
Fig. 4 is a time chart illustrating an example of the change of the command value with time, for the sake of realizing a target trajectory illustrated in Fig. 3(A);
Fig. 5 is a view illustrating a related technique relating to the execution of the motion control according to the motion program through an interpreter scheme;
Fig. 6 is a view illustrating a method for executing the motion control with the motion program through the interpreter scheme, in the control device according to the embodiment;
Figs. 7(A) and (B) are views illustrating an example of a parameter set calculated through an interpreter process, according to the embodiment;
Fig. 8 is a schematic view illustrating processing contents of a command-value arithmetic process in the control device according to the embodiment;
Figs. 9(A), (B) and (C) are schematic views illustrating a method for linking the interpreter process and the command-value arithmetic process to each other, in the control device according to the embodiment; and
Fig. 10 is a flow chart illustrating the procedure of processes executed by the control device according to the embodiment.

### DETAILED DESCRIPTION

There will be described, in detail, embodiments of the present invention, with reference to the drawings. Further, throughout the drawings, the same or corresponding portions will be designated by the same reference characters and will not be described redundantly.

### (A. Examples of the Structure of a Control System)

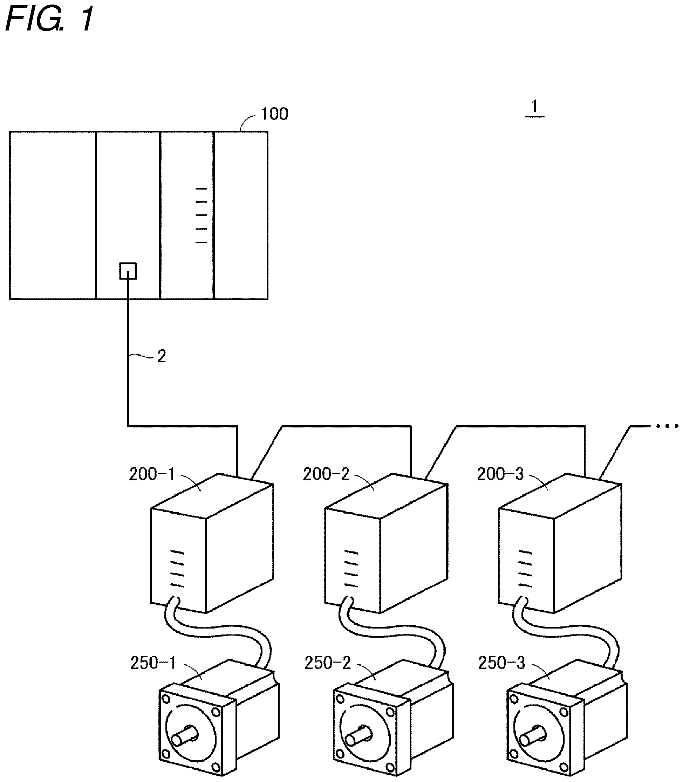

At first, there will be described an example of the structure of a control system according to an embodiment. Fig. 1 is a schematic view illustrating an example of the structure of the control system 1 according to the embodiment. Referring to Fig. 1, the control system 1 includes motors 250-1, 250-2, ••• and motor drivers 200-1, 200-2, ••• for driving the motors 250-1, 250-2, •••. The motor drivers 200-1, 200-2, ••• are connected to a control device 100 through a field network 2 and are adapted to drive the motors 250-1, 250-2, •••, according to commands from the control device 100. Namely, the control device 100 outputs command values to the motor drivers 200-1, 200-2, •••. Hereinafter, the motors 250-1, 250-2, ••• and the motor drivers 200-1, 200-2, ••• will be also comprehensively referred to as "motors 250" and "motor drivers 200", respectively.

The motors 250 are incorporated in equipment and machinery which are controlled by the control device 100 and form driving sources for moving the equipment and the machinery. The types of the motors 250 are not particularly limited, and the motors 250 embrace "motors" having meanings of general driving sources. For example, the motors 250 are constituted by well-known motors, such as AC motors, DC motors, step motors, linear motors.

The motor drivers 200 are constituted by motor drivers having structures suitable for the types of the motors 250 to be driven thereby. For example, they can be constituted by inverters, servo drivers, servo amplifiers, and the like.

The control device 100 is assumed to be a PLC (programmable controller), but the control device 100 is not limited thereto and can be constituted by an arbitrary computer. For example, the control device 100 can be also constituted by a computer referred to as a robot controller or a motion controller.

### (B. Examples of the Structure of the Control Device)

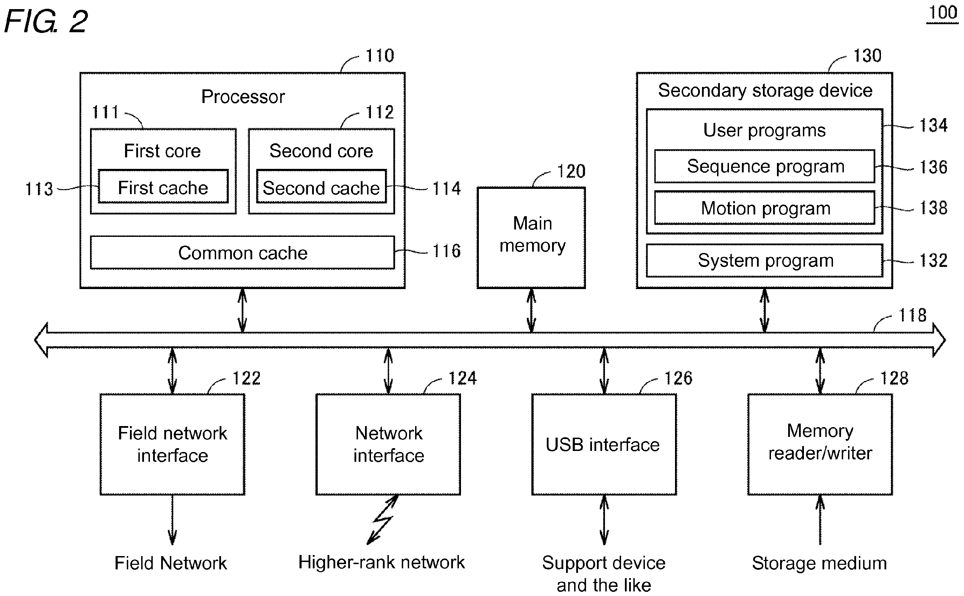

Next, there will be described an example of the structure of the control device 100 which forms a main portion of the control system 1 according to the embodiment. Fig. 2 is a schematic view illustrating an example of the structure of the control device 100 according to the embodiment.

Referring to Fig. 2, the control device 100 is typically a computer structured according to a general-purpose architecture and is adapted to execute programs with a processor for realizing necessary processes and functions. More specifically, the control device 100 includes the processor 110, a main memory 120, a secondary storage device 130, a field network interface 122, a network interface 124, a USB (Universal Serial Bus) interface 126, and a memory reader/writer 128. These components are connected to each other through a bus 118.

The processor 110 corresponds to a processing portion including at least a first operating circuit and a second operating circuit and is structured to execute programs in parallel. As an example, the processor 110 is constituted by a multi-core processor. More specifically, the processor 110 includes a first core 111, a second core 112, and a common cache 116. The first core 111 and the second core 112 interiorly incorporate a first cache 113 and a second cache 114, respectively.

Fig. 2 exemplifies the processor including the two cores. However, it is also possible to employ a processor including more cores. Also, it is possible to employ a structure employing two or more processors each constituted by a single core (namely, a multi-processor). In the control device 100 according to the embodiment, the number of cores and the number of processors can be arbitrarily designed, provided that programs can be executed therein in parallel. Further, as the processor 110, it is also possible to employ a processor specialized for parallel processes such as a GPU (Graphics Processing Unit), as well as a CPU (Central Processing Unit).

The main memory 120 is a storage device for temporarily holding all or portions of programs, code, and work data to be executed by the processor 110. The main memory 120 is constituted by a DRAM (Dynamic Random Access Memory) or an SRAM (Static Random Access Memory), for example.

The secondary storage device 130 is a storage device for holding, in a non-volatile manner, programs to be executed by the processor 110, data to be processed, set parameters, and the like. The secondary storage device 130 is constituted by an HDD (Hard Disk Drive), an SSD (Solid State Drive) or the like, for example. Typically, the secondary storage device 130 stores a system program 132 for providing basic functions of the control device 100, and user programs 134 designed arbitrarily depending on objects to be controlled by the control device 100. The user programs 134 typically include a sequence program 136 for realizing sequence logics, and a motion program 138 for controlling the trajectories of robots and the like. The user programs 134 can be written in arbitrary languages. Namely, the secondary storage device 130 corresponds to a storage portion adapted to store one or more commands (the motion program 138) for specifying the behaviors of the motors 250 to be driven by the motor drivers 200.

The field network interface 122 is a controller responsible for transferring data through the field network 2 which connects the control device 100 and the motor drivers 200 to each other. The field network interface 122 corresponds to an interface for outputting output values to the motor drivers 200. As the field network 2, it is preferable to employ a network adapted to perform fixed-cycle communication, which ensures data reach times. As such networks adapted to perform fixed-cycle communication, there have been known EtherCAT (trademark), EtherNet/IP (trademark), DeviceNet (trademark), CompoNet (trademark), and the like.

The network interface 124 is a controller responsible for transferring data to and from a server device, an HMI (Human Machine Interface) device, and the like in a higher rank. For transferring data to and from the server device, the HMI device and the like in the higher rank, it is possible to employ a packet network such as Ethernet (trademark).

The USB interface 126 is a controller responsible for transferring data to and from support devices and the like. The USB interface 126 transfers data thereto and therefrom through serial communication such as USB.

The memory reader/writer 128 is an interface device for reading/writing data from/into portable storage mediums, such as SD cards. The user programs 134 to be executed by the control device 100 can be installed thereinto through such storage mediums. Also, data to be collected by the control device 100 can be written into such storage mediums.

### (C. Motion Control through the Motion Program)

Next, there will be described motion control through the user programs 134 (the motion program 138) which are executed by the control device 100 according to the embodiment. In the present specification, "the motion control" embraces control for successively providing commands to the motor drivers 200 which drive the motors 250, in order to cause the portions driven by the motors to perform preliminarily-specified behaviors.

Command values (physical amounts or amounts of manipulations corresponding to physical amounts) outputted to the motor drivers 200 are properly selected according to targeted behaviors and are assumed to be position command values, speed command values, acceleration command values, jerk command values, and the like, for example. Hereinafter, as typical examples, there will be described cases where speed command values for the motors are used as command values.

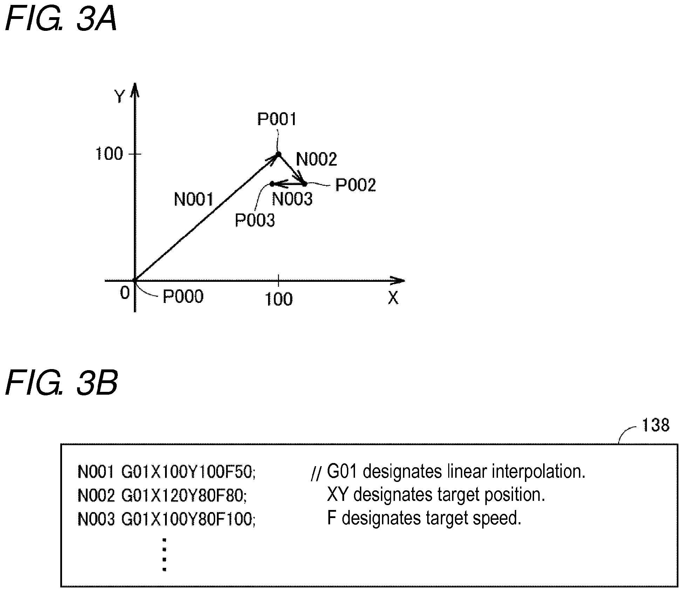

Figs. 3(A) and (B) are views illustrating an example of the motion program 138 which is executed by the control device 100 according to the embodiment. Fig. 3(A) illustrates an example of a target trajectory. In Fig. 3(A), there is illustrated a trajectory of a structure adapted to cause two motors 250 to perform driving regarding an X axis and a Y axis, respectively, in which it is assumed, as an example, that the target is a trajectory which starts from a point P000, then passes through a point P001 and a point P002 and, thereafter, reaches a point P003.

The motion program 138 specifies a total of three trajectories, which are a trajectory N001 from the point P000 to the point P001, a trajectory N002 from the point P001 to the point P002, and a trajectory N003 from the point P002 to the point P003, as respective independent motion commands.

Fig. 3(B) illustrates an example of the motion program 138 for realizing the target trajectory illustrated in Fig. 3(A). Referring to Fig. 3(B), the motion program 138 have lines each corresponding to a respective one of the three trajectories N001, N002 and N003 illustrated in Fig. 3(A). Namely, in the motion program 138, each single line means a single motion command.

As an example, in the motion program 138 illustrated in Fig. 3(B), there are specified "the type of interpolation", "the target termination point" and "the target speed", in association with labels describing N001, N002, N003 and the like. As "the type of interpolation", there is specified "G01" indicating "linear interpolation", in the example illustrated in Fig. 3(B). As "the target termination point", there are specified sets of an X coordinate and a Y coordinate (for example, "X100Y100"). As "the target speed", there are specified "F50" and the like, in the example illustrated in Fig. 3(B).

Further, it is assumed that set values of acceleration, acceleration patterns, speed upper and lower limits and the like have been preliminarily specified, as a system configuration, in addition to the specifications in the motion program 138 illustrated in Fig. 3(B).

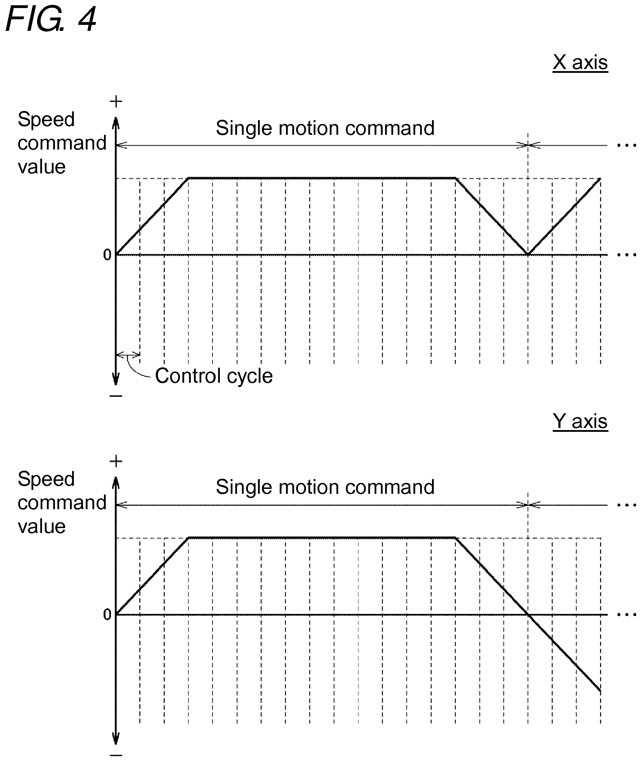

Fig. 4 is a time chart illustrating an example of the changes of the command values with time, for the sake of realizing the target trajectory illustrated in Fig. 3(A). As illustrated in Fig. 4, since the target trajectory is defined in an X-Y plane, it is necessary to provide the respective command values to the two motors which are associated with the X axis and the Y axis. Further, it is necessary to accelerate them at the specified acceleration, from a stationary state up to the target speeds. Accordingly, as illustrated in the time chart in Fig. 4, it is necessary to successively update the command values outputted to the motor drivers, even for a single motion command. The cycle of updating the command values corresponds to "a control cycle". Further, the area indicated by the time chart illustrated in Fig. 4 corresponds to a position command value.

In order to calculate the command values in each control cycle, it is necessary to preliminarily interpret each motion command specified by the motion program 138 illustrated in Fig. 3(B) and to determine a function or arithmetic formula for calculating the command values in each control cycle.

It is possible to conceive a scheme for preliminarily performing operations for parsing, compiling and the like for each motion command specified by the motion program 138 and for determining a function for calculating the command values in each control cycle. However, the control device 100 according to the embodiment employs a scheme for successively interpreting each motion command specified by the motion program 138 and determining a function for calculating the command values in each control cycle and, thereafter, successively calculating the command values in each control cycle. Hereinafter, this scheme will be also referred to as "an interpreter scheme". Namely, the control device 100 according to the embodiment executes motion control according to the motion program, through the interpreter scheme.

### (D. Related Techniques)

Next, there will be described a related technique relating to the execution of the motion control according to the aforementioned motion program through the interpreter scheme.

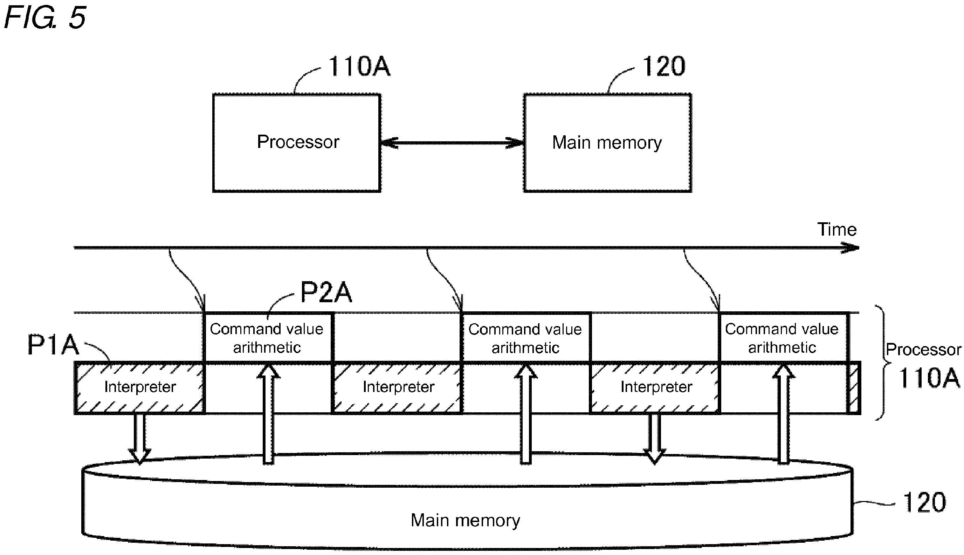

Fig. 5 is a view illustrating a related technique relating to the execution of the motion control according to the motion program through the interpreter scheme. Referring to Fig. 5, in execution of the motion control through the interpreter scheme, there is a need for a process (hereinafter, referred to as "an interpreter process") P1A for successively interpreting each motion command specified by the motion program 138 and, further, there is a need for a process (hereinafter, referred to as "a command-value arithmetic process") P2A for calculating a command value.

The interpreter process P1A for successively interpreting the motion commands corresponds to a process for interpreting the execution of the user programs (the motion program). The command-value arithmetic process P2A for calculating the command value corresponds to a process for updating the command value for controlling an actuator.

In the related technique, a common processor 110A executes these two processes. In order to enable the common processor 110A to execute the two processes, respective processor time periods are assigned to these processes in a time-division manner. Namely, the interpreter process P1 and the command-value arithmetic process P2 are alternately executed. In order to stably update the command value in each predetermined control cycle, in general, the command-value arithmetic process P2A is executed through an interruption process with a constant period, while the interpreter process P1A is executed within the background time periods. In executing the motion control according to the related technique through the interpreter scheme, there are problems as follows.

The processing time periods taken by the command-value arithmetic process P2A for calculating the command values are varied depending on the contents of the motion commands, the execution timings thereof and the like, which induces variations of the processor time periods assigned to the interpreter process P1A. Therefore, it has not been easy to design the motion control by preliminarily estimating such variations.

In setting the cycle for executing the command-value arithmetic process P2A, namely the control cycle, it is necessary to take account of a certain amount of margin time periods, in addition to the time periods required for the execution of the interpreter process P1A, in order to realize stable motion control in consideration of the aforementioned variations in the processor time periods. This makes it impossible to utilize 100% of the performance of the processor.

In order to enable the execution of the command-value arithmetic process P2A through the interruption process, it is necessary to sufficiently consider the setting of the priority regarding the interpreter process P1A and the command-value arithmetic process P2A. Further, in order to transfer the results of arithmetic in the respective processes, it is necessary to incorporate complicated exclusive control regarding the memory access. Since it is necessary to take account of these points, there is a need for longer time periods for consideration and verification for designing and quality assurance.

It is an object of the control device 100 according to the embodiment to overcome the aforementioned problems.

### (E. Parallel Processes)

Next, there will be described a method for executing the motion control according to a motion program through the interpreter scheme, in the control device 100 according to the embodiment.

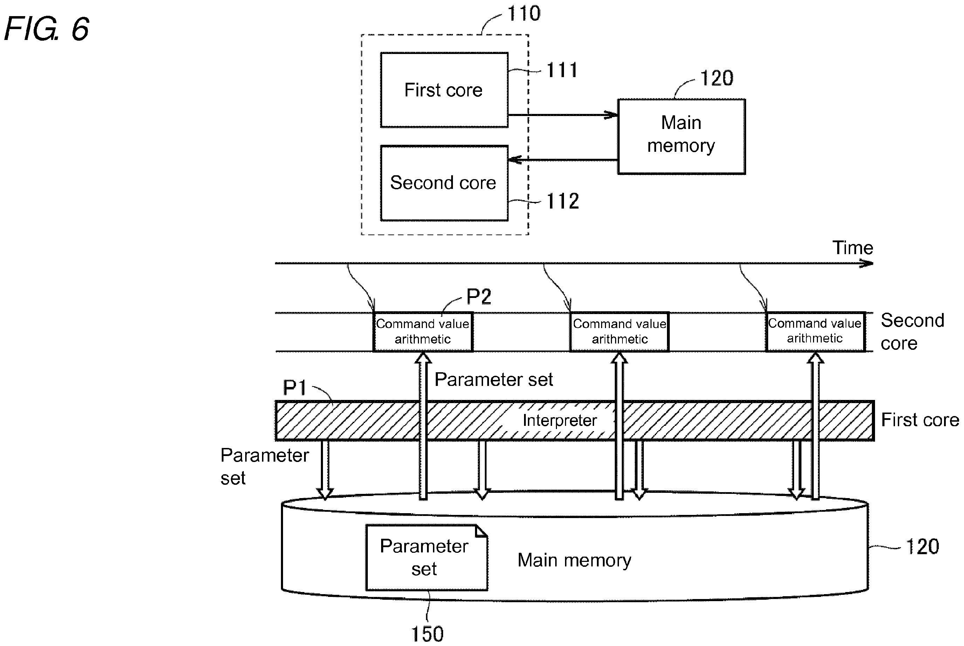

Fig. 6 is a view illustrating the method for executing the motion control according to a motion program through the interpreter scheme, in the control device 100 according to the embodiment. In the embodiment, a process (interpreter process) P1 for successively interpreting each motion command specified by the motion program 138, and a process (command-value arithmetic process) P2 for calculating a command value are executed independently of each other by the respective different arithmetic circuits (the first core 111 and the second core 112 in the processor 110, in the embodiment). At this time, in order to enable the execution of the two processes independently of each other, the results of the arithmetic by the interpreter process P1 are outputted as parameter sets 150, which facilitates the transfer thereof to the command-value arithmetic process P2. Namely, in the interpreter process P1, the motion program 138 is interpreted through the interpreter scheme and is analyzed into the parameter sets 150 for a function. By using the parameter sets 150 resulted from the analysis, it is possible to realize buffering for the main memory 120 which is shared between the two processes. Further, the process for outputting the parameter sets 150 and the process for calculating the command value using the parameter sets 150 will be described later.

In the following description, there will be exemplified a structure adapted to perform buffering for the parameter sets 150 using the main memory 120 as a common memory which can be accessed by the first core 111 and the second core 112. However, it is also possible to utilize the common cache 116 in the processor 110 as the common memory.

As described above, in the embodiment, the interpreter process P1 is simplified as a process for outputting the parameter sets 150 which define a function relating to the calculation of the command value and for writing them into the main memory 120. Further, the command-value arithmetic process P2 is simplified as a process for reading the parameter sets 150 from the main memory 120 and for updating the command value according to the function. Namely, in order to allow the interpreter process P1 to mainly perform only writing of data into the main memory 120 and to allow the command-value arithmetic process P2 to mainly perform only reading of data from the main memory 120, the possibility of contention of accesses to the main memory 120 is made substantially zero and, further, the interpreter process P1 and the command-value arithmetic process P2 are assigned to the respective different cores which share the main memory 120. By employing these processes which are independent of each other, it is possible to overcome problems which would be induced by interferences between the processes.

Namely, the first core 111 (the first arithmetic circuit) executes the interpreter process P1 for successively interpreting one or more commands (the motion program 138) stored in the secondary storage device 130 and for successively calculating the parameter sets 150 defining the function relating to the calculation of the command value. The second core 112 (the second arithmetic circuit) executes the command-value arithmetic process P2 for calculating the command value based on the parameter sets 150 having been successively calculated, in each predetermined control cycle, independently of the execution of the interpreter process P1.

In this case, the first core 111 (the first arithmetic circuit) writes the parameter sets having been successively calculated, into the main memory 120 which functions as the common memory. The second core 112 (the second arithmetic circuit) successively reads out the parameter sets 150 from the main memory 120 which functions as the common memory.

By employing the aforementioned structure, it is possible to substantially prevent the occurrence of contention of accesses to the memory from the respective cores, which eliminates the necessity of incorporating complicated exclusive control regarding memory accesses. Further, for the processes assigned to the respective cores, it is possible to utilize all the processor time periods of the cores which take charge thereof, which enables utilizing 100% of the performance of the processor.

By monitoring the empty time period in each control cycle, for the command-value arithmetic process P2 for updating the command value in each predetermined control cycle, it is possible to shorten each control cycle according to the empty time period, thereby easily optimizing the control accuracy of the motion control.

Since the processes are executed by the respective cores independently of each other, it is possible to simplify the designs of the programs to be executed by the respective cores, thereby reducing the man-hours required for designing and quality assurance.

### (F. the Interpreter Process and the Command-Value Arithmetic Process)

There will be described the parameter sets 150 calculated through the aforementioned interpreter process, and the command-value arithmetic process which utilizes the parameter sets 150.

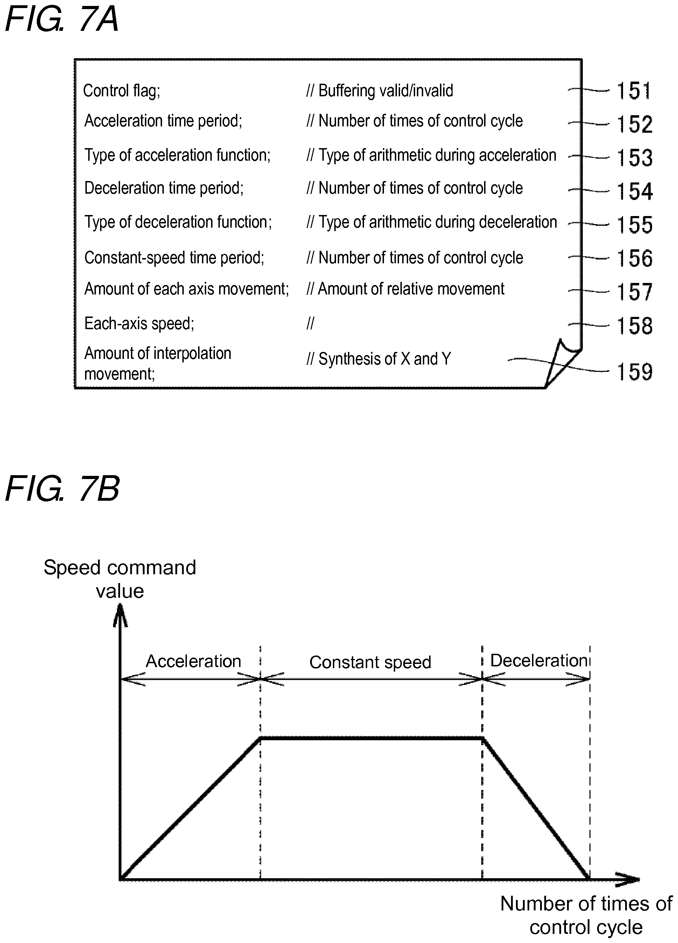

Figs. 7(A) and (B) are views illustrating an example of a parameter set 150 calculated through the interpreter process, according to the embodiment. The parameter set 150 includes one or more parameters which define a function indicative of the change of the command value with time and is constituted by plural parameters as illustrated in Fig. 7(A), as an example. The parameter set 150 illustrated in Fig. 7(A) defines a function indicative of the change of the command value with time (the speed pattern, as an example) as illustrated in Fig. 7(B).

In the interpreter process, the motion program 138 is parsed and, thereafter, the amount of movement is calculated from the specified target position and/or the current position. Further, the acceleration time period, the deceleration time period, and the constant-speed time period are calculated from the specified speed and/or the specified acceleration. Fig. 7(A) illustrates an example of a parameter set 150 resulted from this process.

More specifically, the parameter set 150 includes a control flag 151, an acceleration time period 152, a type of an acceleration function 153, a deceleration time period 154, a type of deceleration function 155, a constant-speed time period 156, an amount of each-axis movement 157, an each-axis speed 158, and an amount of interpolation movement 159. Such a parameter set 150 is calculated for each motion command included in the motion program 138.

The acceleration time period 152 designates the length of the acceleration section in the speed pattern illustrated in Fig. 7(B) and is defined by a number of times of control cycles. The type of the acceleration function 153 designates the type of the temporal change in the acceleration section in the speed pattern illustrated in Fig. 7(B) and can be specified as a linear curve or a higher-order curve. Similarly, the deceleration time period 154 designates the length of the deceleration section in the speed pattern illustrated in Fig. 7(B). The type of the deceleration function 155 designates the type of the temporal change in the deceleration section in the speed pattern illustrated in Fig. 7(B). The constant-speed time period 156 designates the length of the constant-speed section in the speed pattern illustrated in Fig. 7(B).

The sum of the acceleration time period 152, the deceleration time period 154 and the constant-speed time period 156 indicates the time length of the entire speed pattern and is defined by a number of times of control cycles. Namely, the parameter set 150 includes the acceleration time period 152, the deceleration time period 154 and the constant-speed time period 156, as parameters indicative of the number of times the command value should be calculated. Further, when the calculation of the command value based on the parameter set 150 has been executed the specified number of times, the process for calculating the command value based on this parameter set 150 has been completed, and the calculation of the command value based on the next-calculated parameter set 150 is started.

The amount of each-axis movement 157 designates the amount of movement regarding each axis, and the each-axis speed 158 designates the speed regarding each axis. The amount of interpolation movement 159 designates the value of the synthesized amount of the movements regarding the two or more axes.

By using plural parameters as described above, it is possible to form a function indicative of the speed pattern or the like which is defined by the respective motion commands.

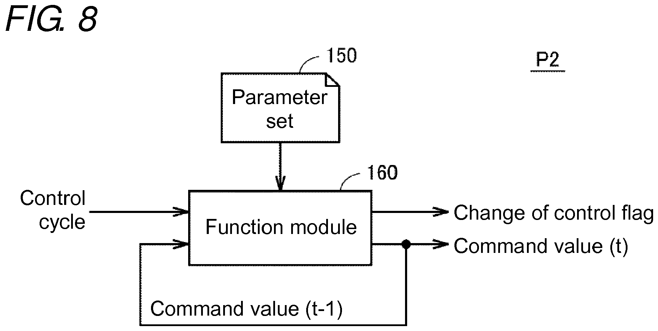

Fig. 8 is a schematic view illustrating the processing contents of the command-value arithmetic process in the control device 100 according to the embodiment. Referring to Fig. 8, the command-value arithmetic process P2 employs a function module 160 adapted to form a function for outputting the command value, when a parameter set 150 calculated through the interpreter process P1 has been inputted thereto. The parameter set 150 is inputted to the function module 160 and, also, the function module 160 successively calculates the command value (t) in each control cycle. In successively calculating the command value, the command value (t-1) in the previous control cycle is used. Further, after the completion of the successive outputting of the command values defined by the parameter set 150 of interest, the value of the control flag 151 in this parameter set 150 is changed from "valid" to "invalid". Further, the next parameter set 150 is read out.

The control flag 151 included in the parameter set 150 in Fig. 7(A) is a flag for managing the calculation of the parameter set through the interpreter process, the completion of the execution of the command-value arithmetic process, and the like. When a parameter set 150 has been newly written into the main memory 120 through the interpreter process, the value of the control flag 151 is set to be "valid". Further, after the completion of the execution of the command-value arithmetic process for the parameter set 150 written into the main memory 120, the value of the control flag 151 is set to be "invalid". In the interpreter process, regarding the parameter set 150 including the control flag 151 having the value set to be "invalid", this parameter set 150 can be determined to have been processed and to be unnecessary. Therefore, this parameter set 150 is removed from the main memory 120, and a new parameter set 150 is calculated as required.

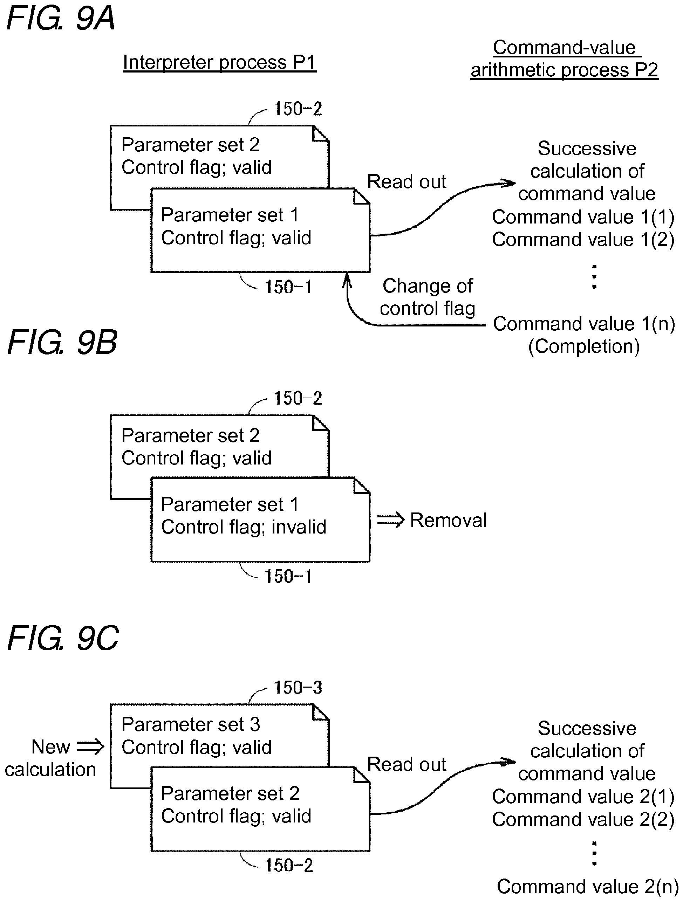

Figs. 9(A), (B) and (C) are schematic views illustrating a method for linking the interpreter process and the command-value arithmetic process to each other, in the control device 100 according to the embodiment. Referring to Fig. 9(A), it is assumed that a parameter set 150-1 and a parameter set 150-2 have been successively calculated from two motion commands included in the motion program 138, through the interpreter process P1. Immediately after the calculation, the values of the control flags 151 in the parameter sets 150 are set to be "valid". Namely, after calculating the parameter sets 150, the first core 111 (the first arithmetic circuit) sets the values of the control flags 151 therein to be a value indicative of "valid", thereby writing state information indicative of the validity, into the main memory 120, in association with the calculated parameter sets 150.

In the command-value arithmetic process P2, successive updating of the command value based on the first-calculated parameter set 150-1 is executed. When specified n command values (a command value 1(1), a command value 1(2), •••, a command value 1 (n)) have been calculated, the value of the control flag 151 in the parameter set 150-1 is changed from "valid" to "invalid". Namely, after completing the calculation of the command value based on the parameter set 150, the second core 112 (the second arithmetic circuit) changes the value of the control flag 151 therein to a value indicative of "invalid", thereby changing the state information associated with the parameter set 150 to the value indicative of the invalidity.

Then, as illustrated in Fig. 9(B), the parameter set 150-1 including the control flag 151 having the value which has been changed to "invalid" is removed from the main memory 120, through the interpreter process P1. Further, as illustrated in Fig. 9(C), a new parameter set 150-3 is created from a new command included in the motion program 138 and is written into the main memory 120, through the interpreter process P1.

On the other hand, in the command-value arithmetic process P2, the command value is successively updated, based on the parameter set 150-2 positioned next to the parameter set 150-1.

As described above, the first core 111 (the first arithmetic circuit) removes a parameter set 150 associated with state information indicative of invalidity (namely, including a control flag having a value set to be "invalid) and, thereafter, writes a newly-calculated parameter set 150 into the main memory 120. The processes as the interpreter process P1 and the command-value arithmetic process P2 are repeated until the completion of the processes for all the motion commands included in the motion program 138.

Further, for convenience of description, although the removal of the parameter set 150-1 illustrated in Fig. 9(B) and the creation of the new parameter set 150-3 illustrated in Fig. 9(C) have been described as being respective different processes, these processes can also be performed at the same time. Namely, the newly-created parameter set 150-3 can be overwritten onto the old parameter set 150-1.

### (G. Procedure of Processes)

Next, there will be described the procedure of processes which are executed by the first core 111 and the second core 112, respectively, in the control device 100 according to the embodiment.

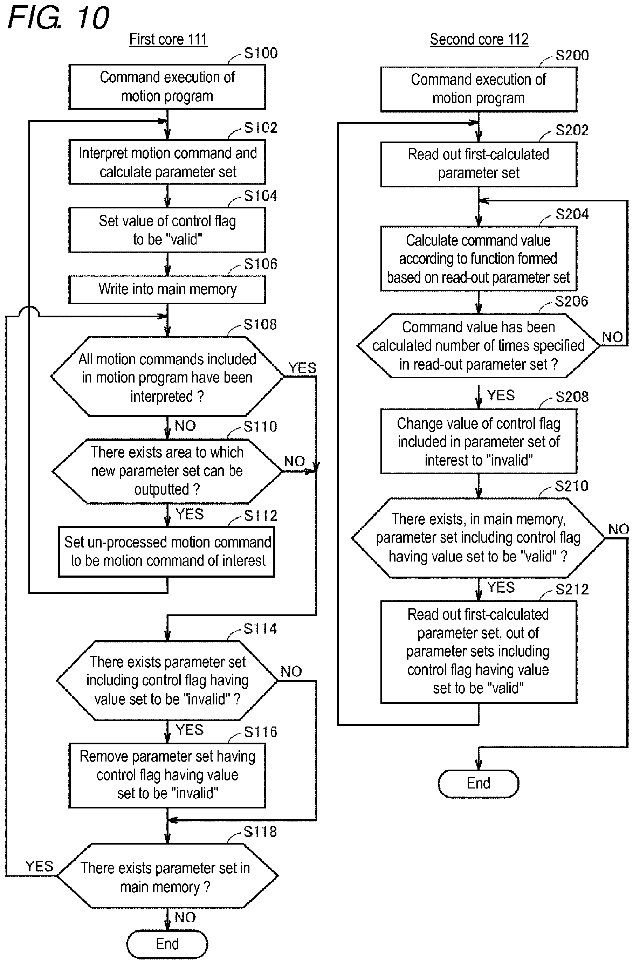

Fig. 10 is a flow chart illustrating the procedure of processes executed by the control device 100 according to the embodiment. Fig. 10 illustrates respective steps which are realized by the execution of programs by the first core 111 and the second core 112. The first core 111 executes the interpreter process P1. The second core 112 executes the command-value arithmetic process P2.

Referring to Fig. 10, if the execution of the motion program 138 is commanded (step S100), the first core 111 interprets a motion command included in the motion program 138 and calculates a parameter set 150 (step S102). Further, the first core 111 sets the value of the control flag 151 therein to be "valid" (step S104) and writes it into the main memory 120 (step S106).

Subsequently, the first core 111 determines whether or not all the motion commands included in the motion program 138 have been interpreted (step S108). If there is a motion command which has not been interpreted, out of the motion commands included in the motion program 138 (No in the step S108), the first core 111 determines whether or not there exists an area to which a new parameter set 150 can be outputted, in the main memory 120 (step S110). If there exists an area to which a new parameter set 150 can be outputted, in the main memory 120 (Yes in the step S110), the first core 111 sets an un-processed motion command included in the motion program 138 to be a motion command of interest (step S112) and calculates and outputs a parameter set 150 therefor. Namely, the processing in and after the step S102 are repeated.

If all the motion commands included in the motion program 138 have been interpreted (Yes in the step S108), or if there exists no area to which a new parameter set 150 can be outputted, in the main memory 120 (No in the step S110), the first core 111 determines whether or not there exists a parameter set 150 including a control flag 151 having a value set to be "invalid" (step S114).

If there exists a parameter set 150 including a control flag 151 having a value set to be "invalid" (Yes in the step S114), the first core 111 removes the parameter set 150 having the control flag 151 having the value set to be "invalid" (step S116).

After the execution of the step S116 or if there exists no parameter set 150 including a control flag 151 having a value set to be "invalid" (No in the step S114), the first core 111 determines whether or not there exists a parameter set 150 in the main memory 120 (step S118). If there exists a parameter set 150 in the main memory 120 (Yes in the step S118), the processing in and after the step S108 are repeated.

If there exists no parameter set 150 in the main memory 120 (No in the step S118), the process ends.

On the other hand, if the execution of the motion program 138 is commanded (step S200), the second core 112 reads out a first-calculated parameter set 150 from the main memory 120 (step S202) and, further, calculates the command value according to a function formed based on this read-out parameter set 150 (step S204). The second core 112 determines whether or not the command value has been calculated the number of times which is specified in the read-out parameter set 150 (step S206). If the command value has not been calculated the number of times which is specified in the parameter set 150 of interest (No in the step S206), the processing in and after the step S204 is repeated.

If the command value has been calculated the number of times which is specified in the parameter set 150 of interest (Yes in the step S206), the second core 112 changes the value of the control flag 151 included in the parameter set 150 of interest to "invalid" (step S208) and, further, determines whether or not there exists, in the main memory 120, a parameter set 150 including a control flag 151 having a value set to be "valid" (step S210).

If there exists, in the main memory 120, a parameter set 150 including a control flag 151 having a value set to be "valid" (Yes in the step S210), the second core 112 reads out, from the main memory 120, a first-calculated parameter set 150, out of the parameter sets 150 each including the control flag 151 having the value set to be "valid" (step S212). Further, the second core 112 repeats the processing in and after the step S204.

If there exists, in the main memory 120, no parameter set 150 including a control flag 151 having a value set to be "valid" (No in the step S210), the process ends.

### (H. Advantages)

According to the embodiment, there is provided a structure adapted to execute the motion control, by interpreting the motion program including plural motion commands in the interpreter scheme. More specifically, the process (the interpreter process) for successively interpreting each motion command specified by the motion program 138, and the process for calculating the command value (the command-value arithmetic process) are executed by the respective different arithmetic circuits, independently of each other. At this time, in order to enable the execution of the two processes independently of each other, the results of the arithmetic by the interpreter process are outputted as parameter sets, which facilitates the transfer thereof to the command-value arithmetic process. As described above, the process required for interpretation through the interpreter scheme and the execution of the motion control is divided into the two processes which can be executed independently of each other. Further, the respective processes are executed by the respective different arithmetic circuits. This can realize updating of the command value in specified control cycles, without being influenced by the amount of arithmetic in the motion program.

The embodiment disclosed herein is to be considered in all respects as illustrative and not restrictive. The scope of the present invention is indicated by the claims rather than by the foregoing description, and all changes which come within the meaning and range of equivalency of the claims are therefore to be embraced therein.

## Claims

1. A control device (100) comprising:
an interface (122) for outputting a command value to a motor driver (200) adapted to drive a motor (250);
a storage portion (130) adapted to store one or more commands for specifying a behavior of the motor (250) driven by the motor driver (200); and
a processing portion (110) including a first arithmetic circuit (111) and a second arithmetic circuit (112);
**characterized in that**
the first arithmetic circuit (111) is adapted to execute a first process for successively interpreting the one or more commands stored in the storage portion (130) and for successively calculating a parameter set which defines a function relating to calculation of the command value, and
the second arithmetic circuit (112) is adapted to execute a second process for calculating the command value based on the successively-calculated parameter set, in each predetermined control cycle, independently of the first process.

2. The control device according to claim 1, further comprising
a common memory (120) which can be accessed from the first arithmetic circuit (111) and the second arithmetic circuit (112), wherein
the first arithmetic circuit (111) is adapted to write the successively-calculated parameter set into the common memory (120), and
the second arithmetic circuit (112) is adapted to successively read out the parameter set from the common memory (120).

3. The control device according to claim 2, wherein
the first arithmetic circuit (111) is adapted to, after calculating the parameter set, write state information indicative of validity, in the common memory (120), in association with this calculated parameter set, and
the second arithmetic circuit (112) is adapted to change the state information associated with the parameter set to a value indicative of invalidity, after completing the calculation of the command value based on this parameter set.

4. The control device according to claim 3, wherein
the first arithmetic circuit (111) is adapted to remove the parameter set associated with the state information indicative of the invalidity and, then, to write a newly-calculated parameter set into the common memory (120).

5. The control device according to any one of claims 1 to 4, wherein
the parameter set includes a parameter indicative of a number of times of control cycles in which the command value should be calculated based on the parameter set, and
after executing the calculation of the command value based on the parameter set calculated through the first process the specified number of times of control cycles, the second arithmetic circuit (112) is adapted to start the calculation of the command value based on a parameter set calculated next through the first process.

6. A control system comprising:
a motor driver (200) adapted to drive a motor (250); and
a control device (100) according to claim 1.

## Patentansprüche

1. Steuervorrichtung (100) aufweisend:
ein Interface (122) zur Ausgabe eines Befehlswerts an einen Motortreiber (200), der eingerichtet ist, einen Motor (250) anzutreiben;
einen Speicherabschnitt (130), der eingerichtet ist, einen oder mehrere Befehle zur Spezifizierung eines Verhaltens des Motors (250), der vom Motortreiber (200) angetrieben wird, zu speichern; und
einen Verarbeitungsabschnitt (110) mit einer ersten Rechenschaltung (111) und einer zweiten Rechenschaltung (112);
**dadurch gekennzeichnet, dass**
die erste Rechenschaltung (111) eingerichtet ist, einen ersten Prozess durchzuführen zum sukzessiven Interpretieren der ein oder mehreren Befehle, die im Speicherabschnitt (130) gespeichert sind und zum sukzessiven Berechnen eines Parametersets, welches eine Funktion definiert, die sich auf die Berechnung des Befehlswerts bezieht, und
die zweite Rechenschaltung (112) eingerichtet ist, einen zweiten Prozess durchzuführen zum Berechnen des Befehlswerts basierend auf dem sukzessive berechneten Parameterset, und zwar in jedem vorbestimmten Steuerzyklus, unabhängig von dem ersten Prozess.

2. Steuervorrichtung gemäß Anspruch 1, ferner aufweisend:
einen gemeinsamen Speicher (120), auf welchen von der ersten Rechenschaltung (111) und der zweiten Rechenschaltung (112) zugegriffen werden kann,
wobei die erste Rechenschaltung (111) eingerichtet ist, das sukzessive berechnete Parameterset in den gemeinsamen Speicher (120) zu schreiben, und
die zweite Rechenschaltung (112) eingerichtet ist, das Parameterset aus dem gemeinsamen Speicher (120) sukzessive auszulesen.

3. Steuervorrichtung gemäß Anspruch 2, wobei
die erste Rechenschaltung (111) eingerichtet ist, nach der Berechnung des Parametersets, Zustandsinformationen, die Gültigkeit anzeigen, in den gemeinsamen Speicher (120) zu schreiben, und zwar in Assoziation mit diesem berechneten Parameterset, und
die zweite Rechenschaltung (112) eingerichtet ist, nachdem die Berechnung des Befehlswerts anhand dieses Parametersets beendet ist, die mit dem Parameterset assoziierten Zustandsinformationen in einen Wert zu ändern, der Ungültigkeit anzeigt.

4. Steuervorrichtung gemäß Anspruch 3, wobei
die erste Rechenschaltung (111) eingerichtet ist, das Parameterset, das mit Zustandsinformationen assoziiert ist, die Ungültigkeit anzeigen, zu entfernen, und danach ein neu berechnetes Parameterset in den gemeinsamen Speicher (120) zu speichern.

5. Steuervorrichtung gemäß einem der Ansprüche 1 bis 4, wobei
das Parameterset einen Parameter umfasst, der eine Anzahl von Steuerzyklen angibt, in welchen der Befehlswert anhand des Parametersets berechnet werden soll, und
die zweite Rechenschaltung (112) eingerichtet ist, nachdem die Berechnung des Befehlswerts anhand des durch den ersten Prozess berechneten Parametersets für die spezifizierte Anzahl von Steuerzyklen durchgeführt wurde, die Berechnung des Befehlswerts anhand eines als nächstes durch den ersten Prozess berechneten Parametersets zu beginnen.

6. Steuersystem, aufweisend:
einen Motortreiber (200), der eingerichtet ist, einen Motor (250) anzutreiben); und
eine Steuervorrichtung (100) gemäß Anspruch 1.

## Revendications

1. Dispositif de contrôle (100) comprenant :
une interface (122) pour délivrer une valeur de commande à un entraîneur de moteur (200) adapté pour entraîner un moteur (250) ;
une partie de stockage (130) adaptée pour stocker une ou plusieurs commandes pour spécifier un comportement du moteur (250) entraîné par l'entraîneur de moteur (200) ; et
une partie de traitement (110) comprenant un premier circuit arithmétique (111) et un second circuit arithmétique (112) ;
**caractérisé en ce que**
le premier circuit arithmétique (111) est adapté pour exécuter un premier processus pour interpréter successivement la ou les commandes stockées dans la partie de stockage (130) et pour calculer successivement un ensemble de paramètres qui définit une fonction relative au calcul de la valeur de commande, et
le second circuit arithmétique (112) est adapté pour exécuter un second processus pour calculer la valeur de commande basé sur l'ensemble de paramètres calculés successivement, dans chaque cycle de commande prédéterminé, indépendamment du premier processus.

2. Dispositif de contrôle selon la revendication 1, comprenant en outre
une mémoire commune (120) qui est accessible depuis le premier circuit arithmétique (111) et depuis le second circuit arithmétique (112), dans lequel
le premier circuit arithmétique (111) est adapté pour écrire l'ensemble de paramètres calculés successivement dans la mémoire commune (120), et
le second circuit arithmétique (112) est adapté pour lire successivement l'ensemble de paramètres de la mémoire commune (120).

3. Dispositif de contrôle selon la revendication 2, dans lequel
le premier circuit arithmétique (111) est adapté pour, après avoir calculé l'ensemble de paramètres, écrire une information d'état indiquant la validité dans la mémoire commune (120), en association avec ledit ensemble de paramètres calculé, et
le second circuit arithmétique (112) est adapté pour modifier l'information d'état associée avec l'ensemble de paramètres en une valeur indicative d'invalidité, après avoir terminé le calcul de la valeur de commande basé sur ledit ensemble de paramètres.

4. Dispositif de contrôle selon la revendication 3, dans lequel
le premier circuit arithmétique (111) est adapté pour supprimer l'ensemble de paramètres associé à l'information d'état indiquant l'invalidité et, pour ensuite écrire un ensemble de paramètres nouvellement calculé dans la mémoire commune (120).

5. Dispositif de contrôle selon l'une quelconque des revendications 1 à 4, dans lequel
l'ensemble de paramètres comprend un paramètre indiquant un nombre de fois des cycles de contrôle où la valeur de commande doit être calculée en fonction de l'ensemble de paramètres, et
après avoir exécuté le calcul de la valeur de commande sur la base de l'ensemble de paramètres calculé par le premier processus le nombre spécifié de fois des cycles de contrôle, le second circuit arithmétique (112) est adapté pour démarrer le calcul de la valeur de commande sur la base d'un ensemble de paramètres calculés ensuite dans le premier processus.

6. Système de contrôle comprenant :
un entraîneur de moteur (200) adapté pour entraîner un moteur (250) ; et
un appareil de contrôle (100) selon la revendication 1.
